# EUROPEAN PATENT SPECIFICATION

(11) **EP 1 603 080 B1**
(45) Date of publication and mention of the grant of the patent: **16.07.2008**
(21) Application number: 05010622.8
(22) Date of filing: 17.05.2005
(51) Int. Cl.: G07B 5/02, G07B 1/00, B26D 5/30

(54) **Printing apparatus, POS system, control method, and recording medium**
Druckmaschine, POS System, Kontrollverfahren und Aufzeichnungsmedium
Appareil d'impression, système de POS, procédé de contrôle et moyen d'enregistrement

(30) Priority: 25.05.2004 JP 2004154636
(43) Date of publication of application: 07.12.2005
(73) Proprietor: Seiko Epson Corporation, Shinjuku-ku, Tokyo 163-0811 (JP)
(72) Inventor: Minowa, Masahiro c/o Seiko Epson Corp., Suwa-shi Nagano-ken 392-8502 (JP)
(74) Representative: Hoffmann, Eckart

(56) References cited:
- EP-A2- 0 416 507
- DE-A1- 3 324 501
- DE-A1- 19 529 505
- DE-U1- 20 104 113
- FR-A1- 2 607 610
- GB-A- 2 159 771
- US-A- 5 066 152

## Description

The present invention relates to a printing apparatus for printing a receipt based on print data containing transaction information print data such as generated by a POS (point-of-sale) application and additional information print data that is to be printed in addition to the transaction information print data, and relates further to a POS system, a control method and a recording medium.

Additional information, e.g., advertising information such as product advertisements and event announcements, is commonly added to and printed in addition to transaction information relating to purchased products and their price on customer receipts in supermarkets and other retailers as well as in fast food stores and other restaurants. A POS system is generally used for generating such print data and printing such receipts. This additional information is not limited to advertising information, however. More recent systems can also print sales promotion information such as coupons and lottery tickets, and the printed receipts are therefore also effective as a sales promotion means for product manufacturers and retailers. Hence, additional information as the term is used herein means any information other than the transaction information that may be printed on a receipt.

Such POS systems typically have a plurality of POS terminal computers connected to a central POS server, and an information-provider server for providing the additional information. The POS terminal computers (host computers) generate the transaction information and have access to a product master, which is a product information database. To process a transaction, the POS terminal computer sends the input data (product codes) acquired by scanning the barcodes on the products purchased by the customer to the POS server. The POS server retrieves and returns the product name, price, and other product information relating to the input data from the product master stored on the POS server to the POS terminal computer. The POS terminal computer then uses this product information to generate the transaction information. The POS terminal computer also sends the input data to the information-provider server to extract and generate the additional information related to the input data from the information-provider server. The POS terminal computer then merges the transaction information and additional information to produce the print data, and sends the print data to an attached printing apparatus to print a receipt containing the additional information. See, for example, JP-A-2003-500767 (Fig. 2).

The operating system (OS) in most POS terminal computers used in retail stores and restaurants as described above is still a disk operating system (DOS). With a DOS, the POS application typically sends print data and print commands directly to the printing apparatus without going through a printer driver. This means that in order to add new functionality, such as printing additional information on receipts, to the POS system, the POS application itself must be modified. Especially, for the DOS, modifying the POS application itself is a complicated and expensive process. POS system users (businesses) therefore strongly desire to be able to add new functions to existing POS systems with little or no modification of the POS application itself.

DE 201 04 113 U discloses a printer that prints on continuous endless paper and cuts the paper dependent on the kind and length of information to be printed on the paper.

In this context it has to be noted that receipts are typically printed on roll paper or some other kind of "endless" printing medium to allow for the varying length from one receipt to another. Hence, to hand a particular receipt out to a customer it has to be cut off the roll paper after having been printed. Receipt printers have a paper cutter for this purpose. A so-called paper cut command added to the print data to be printed for the receipt is used to control the paper cutter so as to cut-off the receipt. When information in addition to transaction information is to be printed on the same receipt, the paper cutter must be controlled to cut-off the receipt after the additional information not before.

An object of the present invention is to solve the foregoing problems and to provide a printing apparatus capable of efficiently printing first print data containing transaction information and second print data containing additional information, and then cutting the receipt at an appropriate position determined by the print data, without changing the POS application. A further object of the invention is to provide a POS system, a method of controlling the printing apparatus and a printing medium for a program to implement the method.

This object is achieved by a printing apparatus as claimed in claim 1, a control method as claimed in claim 9 and a recording medium as claimed in claim 11. Preferred embodiments of the invention are subject-matter of the dependent claims.

When a printing apparatus thus comprised receives print data other than transaction information print data (TI print data or first print data) produced by the POS application such as additional information print data (AI print data or second print data) following the transaction information print data, the printing apparatus determines whether data received while the paper cut command appended to the TI print data is saved and command execution is delayed, is the AI print data based on whether an identifier is detected in the received print data. More specifically, the printing apparatus determines if data received while the paper cut command is delayed is print data to be printed on the same receipt as the received TI print data. If the received print data is not the AI print data, the paper cut command is executed before the received print data is printed while, otherwise, it is executed after the received print data has been printed. A receipt that is cut at the appropriate position can thus be printed and issued.

Because the printing apparatus controls its operation according to the received print data, a print function for printing data other than the TI print data such as AI print data can be added to the host computer by loading an appropriate utility, and modifying the POS application is therefore not necessary.

The AI print data is generated and sent to the printing apparatus as a result of analyzing the TI print data. Depending upon the content of the TI print data, there may be cases where no AI print data is sent to the printing apparatus after the TI print data. Even in such cases the printing apparatus determines the type of print data received (which may be the next TI print data sent while the paper cut command is delayed) and executes the paper cut command before printing the received print data if the received print data is not identified as the AI print data (or any other print data that includes the identifier). A receipt containing only the TI print data can thus also be printed and issued in this situation.

In addition to TI print data and, as the case may be, AI print data header print data is often sent to the printing apparatus. Header print data (typically a logo containing the store name, address, and/or a graphic) is to be printed at the leading end of each receipt before the TI print data. To make the receipt printing process more efficient, the header print data is generally printed at the top of the next receipt before the TI print data for that next receipt is received. When the header print data is sent from the host computer while the paper cut command is delayed, the printing apparatus can determine that the received print data is not AI print data by testing for the above mentioned identifier (such an identifier is generally not contained in the header print data). The paper cut command can thus be executed before the header print data is printed, and the receipt can be appropriately cut between the TI print data or the AI print data, if any, and header print data.

When a paper cut command is not delayed (saved) and neither the identifier nor the paper cut command is contained in the received print data (such as when header print data is received), the print data is preferably simply printed and the paper cut command not executed. Thus arranged, the receipt can still be printed at the appropriate position (between the AI print data and header print data) even when the print data is sent in the order TI print data, AI print data, and header print data.

Furthermore, when the paper cut command is not delayed but the identifier is contained in the received print data (when AI print data is received at any time other than immediately following the TI print data), the paper cut command is preferably executed after printing the print data. When multiple units of AI print data are output consecutively to the printing apparatus, this arrangement enables individually cutting and issuing the second and subsequent units of AI print data.

In a printing apparatus in which the printing position and the paper cutter position are separated, the header print data is generally printed while the leading end of the receipt is being transported beyond the paper cutter position and the receipt is then cut at its trailing end, thereby shortening the white space at the leading end of the receipt.

When this type of printing apparatus receives TI print data generated by a POS application, AI print data following the TI print data, and header print data, and the printing apparatus receives print data while execution of the paper cut command added to the TI print data is delayed (while the command is saved), the printing apparatus determines whether the received print data is AI print data or header print data based on whether an identifier is contained in the received print data. If the received print data is recognized as header print data, the paper is cut after printing the header print data, i.e., after the leading end of the header has moved next to the position of the paper cutter. As a result, receipt paper waste can be reduced while the receipt can still be cut at an appropriate position (between the header print data and either the AI print data or TI print data).

Furthermore, because the printing apparatus controls operation based on the received print data, a function for printing header print data, for example, can be added to the host computer side by adding a print utility and without needing to modify the POS application.

Furthermore, when the AI print data is generated by analyzing the content of the TI print data, AI print data may or may not be sent to the printing apparatus after the TI print data depending upon the content of the transaction information. Even when AI print data is not sent (such as when the header print data for the next receipt is received while the paper cut command is saved (delayed)), however, the receipt can be cut at an appropriate position (between the TI print data and header print data).

If the paper cut command is not delayed (saved) and the identifier is not contained in the received print data (such as when AI print data is received after the header print data), the received print data is printed without executing the paper cut command. This arrangement enables consecutively printing the TI print data and AI print data even when the AI print data is sent before the TI print data.

Yet further, if a paper cut command has not been saved (delayed) and print data not containing the identifier is received, the paper is still preferably cut after printing the print data even though a paper cut command was not added to the print data. This arrangement thus affords receiving and printing print data other than the TI print data, AI print data, and header print data, and enables cutting the paper after printing print data that does not contain an identifier.

Other objects and attainments together with a fuller understanding of the invention will become apparent and appreciated by referring to the following description and claims taken in conjunction with the accompanying drawings.
- Fig. 1: is a schematic diagram showing a POS system according to a preferred embodiment of the present invention;
- Fig. 2: is a function block diagram of the host computer and printing apparatus;
- Fig. 3: is a control block diagram of the printing apparatus;
- Fig. 4: is a flow chart of the printer control process run by the printing apparatus;
- Fig. 5: shows a sample receipt;
- Fig. 6: shows the relationship between printing position and the paper cutter position in a printing apparatus according to a second embodiment of the invention;
- Fig. 7: shows a sample receipt printed by this second embodiment;
- Fig. 8: is a function block diagram of the host computer and printing apparatus in a second embodiment of the invention;
- Fig. 9: is a flow chart of the printer control process run by the printing apparatus in a second embodiment of the invention; and
- Fig. 10: is a schematic diagram showing a POS system according to a third embodiment of the present invention.

When a printing apparatus according to the present invention receives transaction information print data (abbreviated to TI print data in this text) such as generated by a POS application, the printing apparatus stores (withholds) the paper cut command contained in the TI print data. The printing apparatus then checks whether print data received after the paper cut command is stored contains a predetermined identifier to determine the timing for executing the stored paper cut command, and can thus cut off the receipt at the appropriate position. New functions can thus be added with minimal capital investment and without changing the POS application by thus enabling the printing apparatus to execute various control operations according to the received print data.

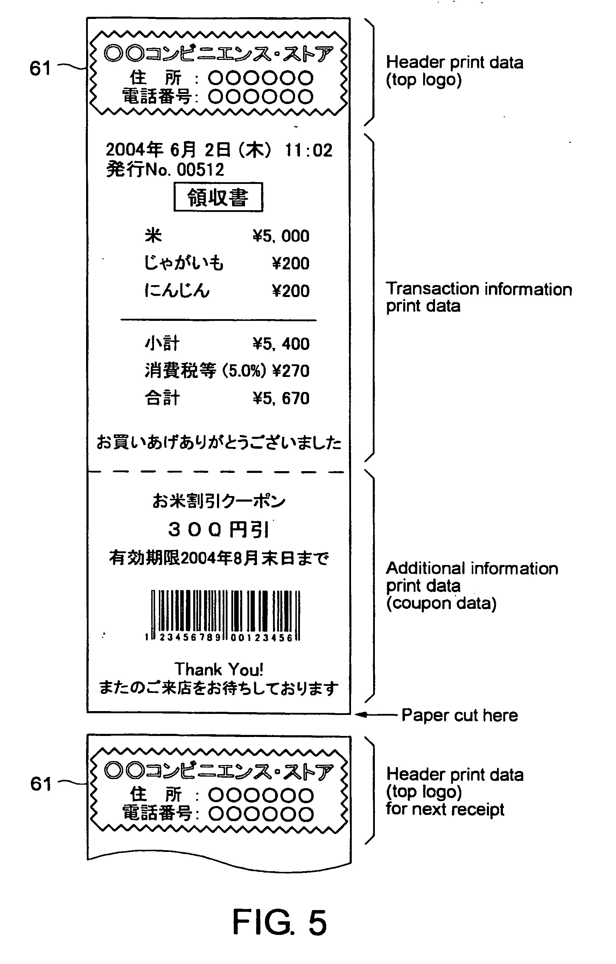

The invention is described below referring, by way of example, to a POS system such as used in a supermarket, fast food store, or other retail business where the POS system has a mechanism for printing header print data, TI print data, and additional information print data (abbreviated to AI print data in this text) on a receipt 61. As shown in Fig. 5, the header print data typically includes the store name, address, telephone number, and graphics. The additional information (AI) relates to advertising or sales promotions.

### FIRST EMBODIMENT

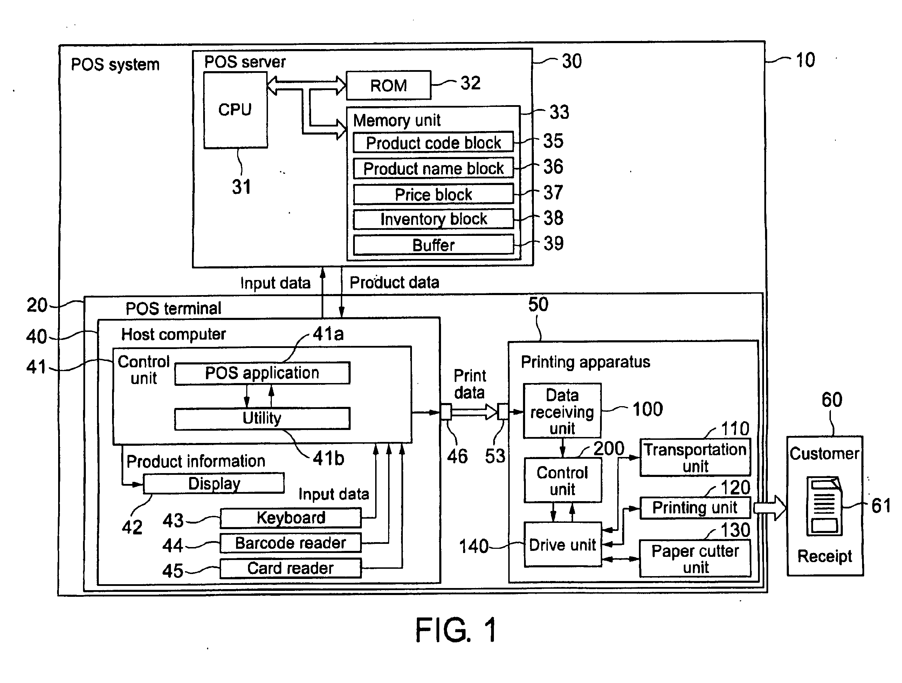

As shown in Fig. 1 a POS system 10 according to this embodiment of the invention is composed of one or more POS terminals 20 (only one being shown in Fig. 1) and a POS server 30 connected over a network to each POS terminal 20 for centrally managing input data entered to each POS terminal 20. The operator (user) of the POS terminal 20 scans the barcode from each purchased product using a barcode reader 44, and the POS terminal 20 sends the captured barcode data to the POS server 30.

The POS server 30 has a CPU 31, a ROM 32, and a working memory unit 33, and processes data stored in a buffer 39 of the memory unit 33 according to a control program stored in the ROM 32.

The memory unit 33 stores the product master, which is a database containing for each product a record including fields for a product code 35, a product name 36, and a price 37, as well as an inventory 38 field. Based on input data (barcode data) received from the POS terminal 20, the CPU 31 extracts information relating to the product code, name, and price for each product from the product master and sends it to the POS terminal 20. Based on the data received from the POS server 30, the POS terminal 20 generates product data for printing a receipt 61 and for display on a display 42 of the POS terminal 20.

This product data is the data from which the TI print data (see Fig. 5) is generated by a host computer 40 of the POS terminal, and contains the product name, price, and other product information to be printed on the receipt 61.

The POS terminal 20 has the host computer 40 and a printing apparatus 50 (receipt printer) interconnected through connectors 46 and 53. The host computer 40 runs a transaction process for generating the TI print data to be printed on the receipt 61 and for saving the input data to the POS server 30 based on the product data acquired from the POS server 30. The printing apparatus 50 prints the print data on a printing medium and cuts the printing medium to obtain the receipt 61. Note that without limitation the printing medium is supposed to be receipt paper in the form of rolled paper in the following.

The host computer 40 gets the input data from the products by reading barcodes with the barcode reader 44; alternatively, the data may be manually entered by means of a keyboard 43. Credit card information for credit card transactions and customer information such as a membership number can also be acquired by scanning a customer credit card or member card using a card reader 45. If authorization is required such as to use a credit card, the credit card information is sent to an authorization server (not shown in the figure) used by the credit card company to determine if the transaction can be processed.

The host computer 40 also has the display 42 for presenting the product information generated from the product data received from the POS server 30 so that the customer 60 can also view the product and price information.

The host computer 40 also has a control unit 41 composed of a POS application 41 a running under the DOS; a utility 41 b can be loaded for adding or changing functions as required. Therefore, by adding a utility 41 b enabling the additional printing of header print data to a POS application 41 a having a function for generating the TI print data and corresponding AI print data, this embodiment of the invention affords an arrangement whereby these three print data blocks can be printed. However, simply adding this utility 41b does not enable the printing apparatus 50 to run an appropriate printing process including a receipt cutting process, and the printing apparatus 50 therefore runs a process for evaluating the received print data and controlling operation accordingly as described in further detail below.

The POS application 41 a generates the TI print data for printing on a receipt 61 based on information such as the product data and price information retrieved from the POS server 30. In order to have the TI print data printed by the printing apparatus 50 according to the command system of the printing apparatus 50, print commands are generated in addition to the TI print data, and a paper cut command is appended to the TI print data for cutting off the printed part of the receipt paper as a receipt 61 from the rest of the receipt paper. The print commands, TI print data, and paper cut command are then sent to the printing apparatus 50.

The POS application 41 a also analyzes the TI print data and generates the AI print data based on the result of this analysis. More specifically, the POS application 41 a determines if the product data (product codes and/or product names) and/or the transaction sum total contained in the TI print data meet specific conditions predefined for generating respective AI print data.

For example, if the condition for issuing a coupon for rice is that "rice" is contained in the product data to be printed, AI print data for printing a coupon for rice is generated only if "rice" is one of the products purchased by the customer. A print sample is shown in Fig. 5. The POS application 41 a therefore does not necessarily produce AI print data for every transaction process. When AI print data is generated, the POS application 41 a adds the above mentioned predetermined identifier to the AI print data before sending the data to the printing apparatus 50. This identifier is such that it uniquely identifies the print data to which it is added in a manner that allows this print data (the AI print data is this embodiment) to be positively distinguished from all other kinds of print data that might be sent to the printing apparatus, in particular, TI print data and header print data.

As described above, the utility 41 b is a program for generating header print data such as a store logo, the store name, address, telephone number, and/or graphics, for example, and is programmed to send the header print data to the printing apparatus 50 after sending the AI print data.

As shown in Fig. 5 the header print data is printed at the top of each receipt before the TI print data. This embodiment of the invention thus improves the efficiency of the receipt printing process by sending the header print data after sending the AI print data because the header of the next receipt can thus be printed before the TI print data for said next receipt is received. If no AI print data is generated and printed, the header print data is sent to the printing apparatus 50 when status data indicating that no additional information will be printed (that is, the result of analyzing the product data) is received from the POS application 41 a.

One or more different kinds of header print data may be stored by the utility 41 b; for example, multiple different headers can be stored and used according to the time of day or day of the week.

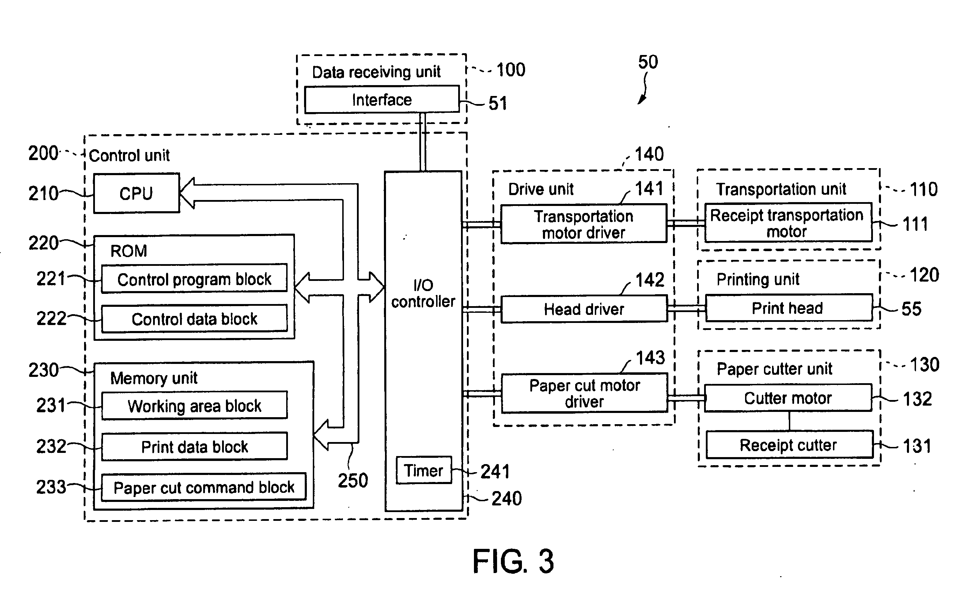

The printing apparatus 50 in this embodiment is a receipt printer composed of a data receiving unit 100 for receiving control commands and print data from the host computer 40, a transportation unit 110, a printing unit 120, a paper cutter unit 130, a drive unit 140 for driving the printing unit 120 and the paper cutter unit 130, and a control unit 200 for controlling the operation of the printing apparatus 50. This printing apparatus 50 is described more fully below with reference to Fig. 3.

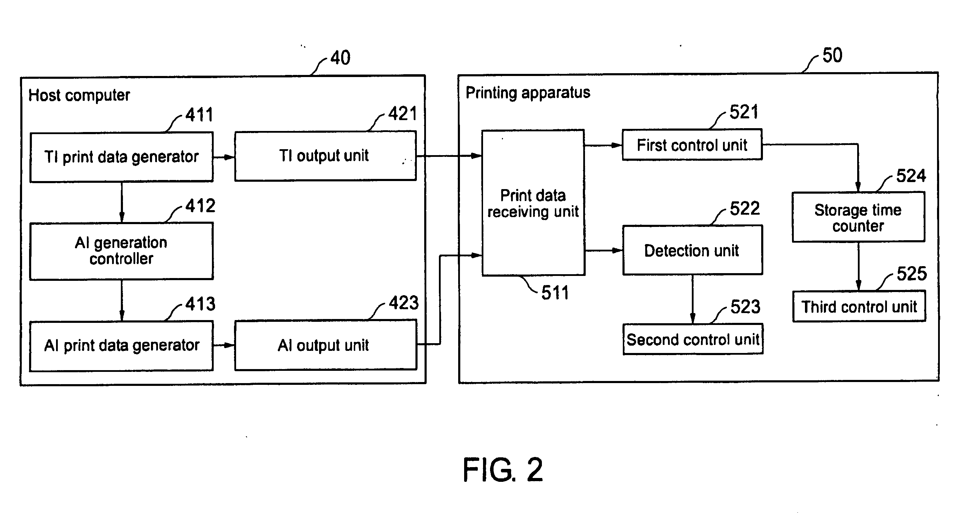

The control arrangement of the host computer 40 and printing apparatus 50 is described next with reference to the function block diagram in Fig. 2. As shown in Fig. 2 the host computer 40 has a TI print data generator 411, a TI output unit 421, an AI generation controller 412, an AI print data generator 413, and an AI output unit 423.

The TI print data generator 411 produces TI print data with a paper cut command. The TI output unit 421 sends the TI print data and paper cut command produced by the TI print data generator 411 to the printing apparatus 50. The AI generation controller 412 determines, based on the result of analyzing the TI print data, whether or not AI print data is to be generated. The AI print data generator 413 then generates the AI print data if the AI generation controller 412 decides that AI print data is to be generated. The AI output unit 423 adds the above mentioned identifier identifying as such the AI print data supplied from the AI print data generator 413, and outputs the AI print data and identifier to the printing apparatus 50.

The main part of these elements of the host computer 40 are rendered by the POS application 41 a. Though not particularly shown in the figures, the host computer 40 also has a header print data generator for producing the header print data, and a header print data output unit for sending the header print data produced by the header print data generator to the printing apparatus 50. The utility 41 b provides the main part of the header print data generator and header print data output unit.

The TI print data generator 411 generates a different transaction number for each transaction process (each receipt) and adds the transaction number to the TI print data generated based on respective input data.

Based on the TI print data, the AI generation controller 412 references an AI table to determine whether or not AI print data is to be generated. This AI table contains the generating conditions (such as product codes and total amount information) and the AI print data to be printed if the adding conditions are met. More specifically, if a product code and/or the sum total contained in the TI print data meets the generating conditions (that is, the respective product code is found in the AI table, and/or the sum total of the purchase is within a specific price range (or exceeds a specific amount) defined in the AI table), the AI generation controller 412 determines that AI print data is to be generated. If none of the product codes is found and/or the total amount does not meet the adding conditions, the AI generation controller 412 determines that no AI print data is to be generated.

If the AI print data is to be generated, the AI print data generator 413 extracts all AI print data relating to the total amount and/or the product codes contained in the TI print data, and generates the AI print data by merging (arranging) the extracted AI print data in the order extracted or according to a specific format defined in the AI print data generator 413.

The AI output unit 423 extracts the transaction number added to the TI print data for which the AI print data is generated, and adds this transaction number to the AI print data.

If the AI generation controller 412 decides that no AI print data is to be produced, the AI generation controller 412 sends corresponding status data to the utility 41 b.

As also shown in Fig. 2, the printing apparatus 50 has a print data receiving unit 511, a first control unit 521, a detection unit 522, a second control unit 523, a storage time counter 524, and a third control unit 525.

The print data receiving unit 511 receives print data from the host computer 40, and the first control unit 521 takes control when the print data receiving unit 511 receives TI print data. The detection unit 522 determines if print data received while a paper cut command is stored for execution (that is, is delayed) is AI print data. The second control unit 523 controls printing the print data and executing the paper cut command based on the detection result from the detection unit 522. The storage time counter 524 measures how long a paper cut command is being stored (its execution is delayed) by the first control unit 521. The third control unit 525 unconditionally executes the paper cut command when the time measured by the storage time counter 524 exceeds a specified limit. The print data receiving unit 511 of the printing apparatus 50 is composed primarily of the data receiving unit 100 and the other parts are composed primarily of the control unit 200. (See Fig. 1.)

When TI print data is received, the first control unit 521 controls printing the TI print data and saves the paper cut command added to the TI print data. The paper cut command is saved by setting a paper cut command flag triggered by recognizing (detecting) the paper cut command appended to the end of the TI print data. The storage time counter 524 thus measures how long the paper cut command has been saved by checking the status of this paper cut command flag, i.e., the duration is measured during which the paper cut command flag remains set.

When print data is received while the paper cut command flag is set (that is, the paper cut command is saved), the detection unit 522 determines if the received print data is AI print data by reading the print data and checking if the print data has the identifier that identifies the print data as AI print data.

As mentioned before, the same transaction number as that contained in the TI print data is also added to the AI print data generated for that TI print data. This transaction number may serve the purpose of the identifier at the same time provided the position of the transaction number within the print data, the format or the like prevents the transaction number in the TI print data to be misinterpreted as the identifier of the AI print data. In addition to detecting if the identifier is present in the received print data, the detection unit 522 can also detect if the transaction number is contained (either in addition to the identifier or as the identifier) and, if so, if it is the same as the transaction number detected in the previously received TI print data (that is, the TI print data that triggered saving the paper cut command). An error can then be reported to the host computer 40 and on the display (not shown in the figure) of the printing apparatus 50 if the transaction numbers do not match. This enables determining if the AI print data that should be added to the TI print data is wrong, and can thus reduce processing errors.

If the detection unit 522 determines that the print data is AI print data, the second control unit 523 executes the paper cut command after the AI print data has been printed. If the print data is not the AI print data, the paper cut command is executed before printing the received print data. Upon execution of the paper cut command the paper cut command flag is reset.

If the storage time counter 524 determines that the paper cut command has been saved for longer than a specified time, the third control unit 525 unconditionally executes the paper cut command and resets the paper cut command flag.

The control arrangement of the printing apparatus 50 is further described below with reference to the control block diagram in Fig. 3. As already described before and again shown in Fig. 3 the printing apparatus 50 has the data receiving unit 100, the transportation unit 110, the printing unit 120, the paper cutter unit 130, and the drive unit 140, all units connected to the control unit 200 for controlling overall printing apparatus 50 operation.

The data receiving unit 100 has an interface 51 for communicating data with the host computer 40. The transportation unit 110 has a receipt transportation motor 111 and conveys the receipt paper for printing. The printing unit 120 has a print head 55 for printing data on the receipt 61 synchronized to transportation of the receipt 61. The paper cutter unit 130 has a receipt cutter 131 and a cutter motor 132 for driving the receipt cutter 131 to cut off the receipt 61 from the receipt paper. The drive unit 140 has a transportation motor driver 141, a head driver 142, and a paper cutter motor driver 143 for driving the transportation motor, print head, and paper cutter, respectively.

The control unit 200 has a CPU 210, a ROM 220, a memory unit 230, and an input/output control unit (I/O controller) 240 interconnected over an internal bus 250.

ROM 220 has a control program block 221 for storing a control program run by the CPU 210 to control operation according to the received print data, and a control data block 222 for storing control data such as data relating to the specific time the paper cut command is stored and character data for printing text. The character data could be stored in a dedicated character data ROM instead of in ROM 220.

The memory unit 230 is used as working memory when the control process is run, and includes a working area block 231 for storing flags such as the paper cut command flag, a print data block 232 (receive buffer) for temporarily storing the print data received from the data receiving unit 100, and a paper cut command block 233 for temporarily storing (saving) the paper cut command added to the TI print data. The memory unit 230 is constantly backed up so that the stored data is not lost if the power fails, or the data is stored in a non-volatile storage device such as flash ROM.

The I/O controller 240 includes logic circuits composed of gate arrays and custom IC devices for complementing the functions of the CPU 210 and handling interface signals for communication with peripheral circuits. The I/O controller 240 also has a timer 241 for measuring how long the paper cut command is saved. The I/O controller 240 thus passes print data received from the host computer 40 to the internal bus 250 either directly or after processing the data, and works in conjunction with the CPU 210 to output data and control signals output from the CPU 210 through the internal bus 250 to the drive unit 140 either directly or after processing the data.

The CPU 210 receives signals and data from the data receiving unit 100 via the I/O controller 240 by running a control program stored in ROM 220. The CPU 210 also processes data in memory unit 230 based on the received signals and data, and controls printing (including cutting off the receipt 61) by outputting signals and data through the I/O controller 240 to the drive unit 140.

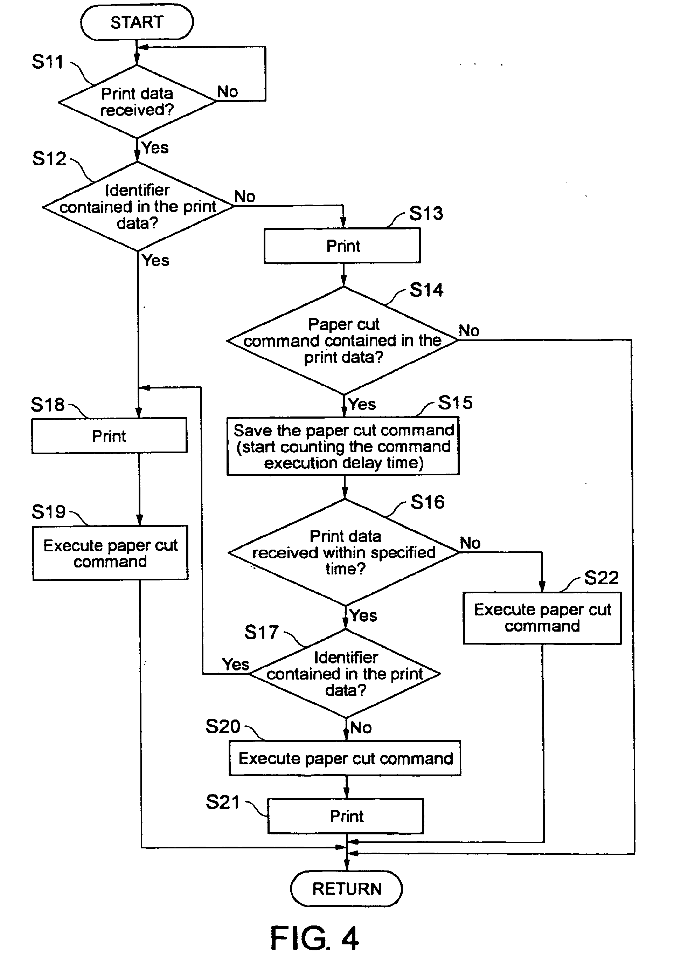

How the CPU 210 controls printing by the printing apparatus 50 is described next with reference to the flow chart in Fig. 4. For brevity, this embodiment of the invention is described below as receiving and printing TI print data, AI print data (such as coupon data), and header print data (such as a top logo), and receiving and printing other types of print data is not addressed.

When the printing apparatus 50 (CPU 210) receives print data from the host computer 40 (S11 returns Yes), the printing apparatus 50 determines if the identifier is contained in the print data that uniquely identifies them as AI print data (S12). If the identifier is not contained in the print data (S12 returns No), the transportation unit 110 and the printing unit 120 are driven to print the print data (TI print data or header print data) (S13), and whether a paper cut command is appended to the print data (whether the print data is TI print data) is determined (S14).

If a paper cut command is not appended (the received print data is the header print data) (S14 returns *No*), the printing apparatus 50 waits to receive the next print data (control returns to S11). If a paper cut command is detected (TI print data was received) (S14 returns Yes), the paper cut command flag is set and the paper cut command is thus saved (stored in paper cut command block 233), and the timer 241 in the I/O controller 240 starts counting the time (S15). If next print data is received within the predefined time (the specified maximum storage time set in the control data block 222) (S16 returns Yes), whether the identifier was added to that print data (that is, whether AI print data was received) is determined (S17).

If the identifier is found in the received print data (AI print data was received) (S17 returns Yes), the print data is printed (S18) and the paper cut command is then executed (the receipt paper is cut by the paper cutter unit 130, S19). After the paper cut command is executed, the paper cut command flag is also cleared (the paper cut command is cleared).

A sample of a receipt 61 resulting from the foregoing process is shown in Fig. 5. As shown in the figure the receipt 61 starts with the header print data (top logo) printed at the top of the receipt (the leading end being at the top in Fig. 5), followed by the TI print data and AI print data (coupon data), and is then cut at the trailing end following the AI print data (the paper cut position). The dotted line printed at the boundary between the TI print data and AI print data is contained in the AI print data in this embodiment of the invention.

AI print data is not necessarily sent from the host computer 40, and there are situations in which no further print data is received after TI print data has been received, namely, when the application does not print header print data (such situation occurs when only the TI print data and AI print data, if any, are sent from the host computer 40, but where no AI print data is actually sent). Therefore, if no further print data is received within the specified time in step S16 (S16 returns *No*), the paper cut command is automatically executed after the specified time passes (S22). In this situation the receipt 61 is issued without AI print data and without header print data shown in Fig. 5 (that is, the receipt is cut after the TI print data is printed).

If further print data is received in the specified time (S16 returns Yes) but the identifier is not contained in the received print data (S17 returns *No*), the paper cut command is executed (S20) and the print data is then printed (S21). In this situation the receipt 61 is issued without the AI print data shown in the sample in Fig. 5, and the header print data is printed for the next receipt 61. Thus printing the header print data that is printed before the TI print data at the leading end of the next receipt before the TI print data for the next receipt is received improves the efficiency of the receipt printing process.

If a paper cut command is not saved but the identifier is detected in the received print data (which occurs when the AI print data is received at any time other than immediately after the TI print data) (S12 returns Yes), the print data is printed (S18) and the paper cut command is then executed (S19). Therefore, when multiple units of AI print data are sent added consecutively to the TI print data, the receipt 61 is issued with a cut following each of the second and subsequent units of AI print data.

Whether the printing apparatus 50 receives TI print data generated by the POS application 41 a, AI print data appended to the TI print data, or other print data, a printing apparatus 50 according to this embodiment of the invention determines whether print data that is received while a paper cut command extracted from the TI print data is saved is the AI print data, that is, whether the received print data is print data to be printed on the same receipt 61 as the TI print data, based on the presence or absence of an identifier in the received print data. If the print data is not the AI print data, the receipt paper is cut before printing the received print data and the receipt 61 can thus be cut at an appropriate position.

Furthermore, because this printer operation is controlled by the printing apparatus 50 itself based on the received print data, a function for printing data other than the TI print data and AI print data can be added to the host computer 40 by simply adding an appropriate utility 41 b, and additional functionality can thus be added to the host computer 40 without changing the POS application 41a.

Furthermore, when AI print data is generally generated subject to an analysis of the TI print data, AI print data may or may not be sent to the printing apparatus 50 after the TI print data depending upon the content of the transaction. However, because the receipt paper is cut before received print data other than AI print data is printed, even when no AI print data is sent to the printing apparatus, (such as when the next TI print data is received while the paper cut command is saved), a receipt 61 containing only the transaction information can be issued.

As also described above the paper cut command is unconditionally executed when a specified time has passed after the paper cut command added to the TI print data was saved. The receipt 61 can thus be automatically cut off when the print data sent from the host computer 40 normally contains only the TI print data and the AI print data (including situations when the header print data is simply not printed) and AI print data is not sent for printing due to the content of the TI print data.

In other words, executing the paper cut command need not be delayed until the next TI print data is received as a result of the AI print data or header print data not being sent after the TI print data is received.

The foregoing embodiment of the invention is described as receiving TI print data, AI print data, or header print data, and using an identifier added to the data to uniquely identify the AI print data and distinguish it from TI print data and header print data. The data to which the identifier is added is not limited, however, to the AI print data, that is, the data generated based on an analysis of the TI print data. More specifically, the print data to which the identifier is added for the control of the paper cutter unit could be print data other than the TI print data, the AI print data, and the header print data. Steps S12 and S17 therefore simply evaluate the received print data based on the presence or absence of an identifier, and do not specifically determine if the received data is coupon data or other AI print data.

### SECOND EMBODIMENT

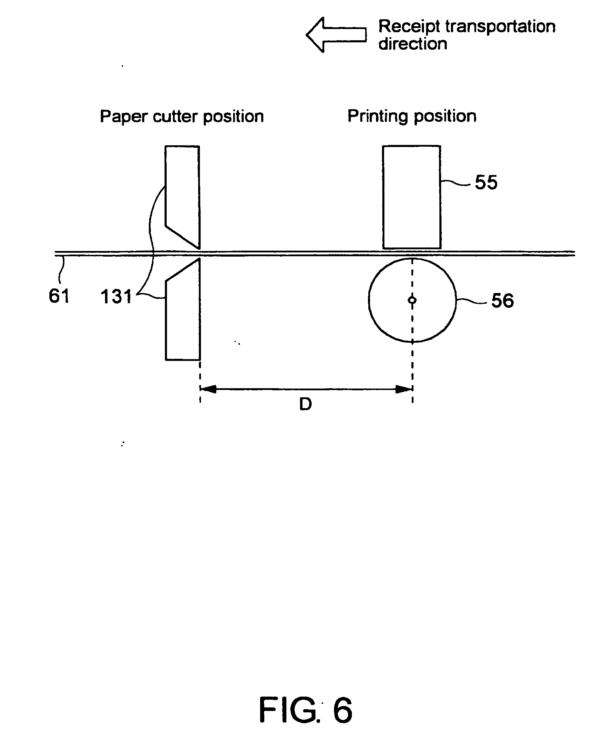

A second embodiment of the present invention is described below with reference to Fig. 6 to Fig. 9.

The first embodiment of the invention described above is best suited to a printing apparatus in which the position of the printing unit and that of the paper cutter unit are very close together or coincide. In such case, a paper cut command executed after certain print data has been printed will cut the receipt paper immediately after the last printing line of the print data. Likewise, executing the paper cut command and subsequently printing header print data, for instances, puts the header right at the top of the next receipt without any larger blank space to the cutting edge.

As shown in Fig. 6 illustrates a case in which the printing position and the paper cutting position of the printing apparatus are separated.

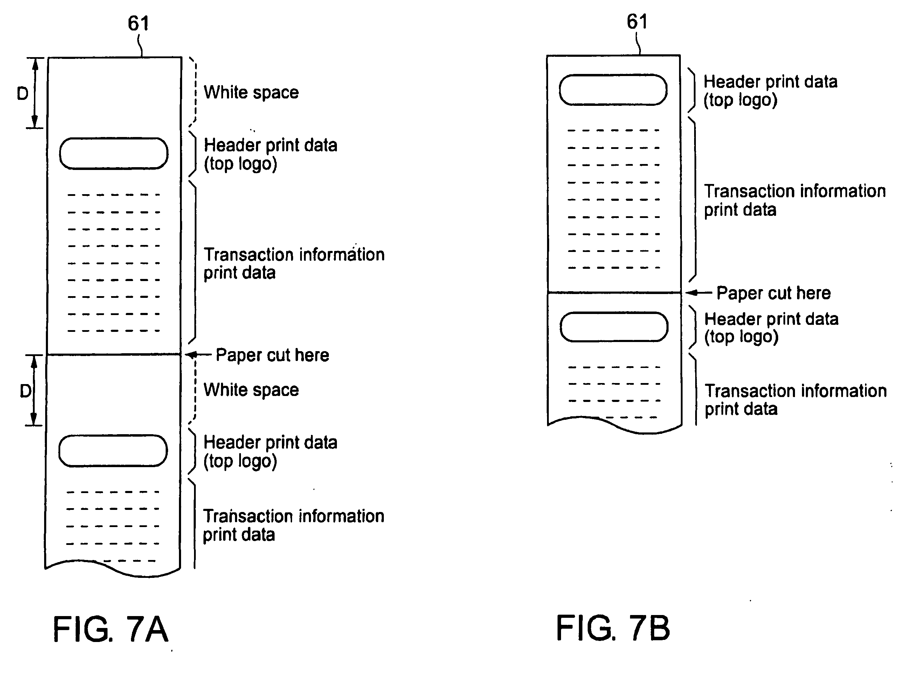

As shown in Fig. 6, the printing position at which the print head 55 and the platen 56 are disposed is on the upstream side, in the receipt paper transportation direction, of the paper cutter position at which the receipt cutter 131 is disposed. The distance between both positions is D. If the receipt were cut immediately after printing the TI print data, the receipt would be cut somewhere within the print-out of the TI print data. The receipt paper must therefore be fed by the distance D after printing the TI print data ends and before the receipt is cut off if the receipt is to be cut after the end of the printed TI print data. However, if the header print data is printed after feeding the receipt by this distance D, a blank space of length D is necessarily left at the leading end of the receipt as shown in Fig. 7A.

The waste of receipt paper involved in this blank space could be avoided by making the paper transportation direction reversible and retracting the receipt paper after cutting off a receipt after the TI or the AI print data and before printing the header print data for the next receipt. The second embodiment of the invention described hereinafter solves this problem in a different way. More particularly, the printing apparatus 50 of the second embodiment controls printing while reducing the blank space at the leading end of the receipt in this type of printing apparatus 50 without requiring the receipt to retracted. Primarily the differences between this embodiment and the foregoing embodiment are described below.

This embodiment of the invention solves this problem by printing the header print data for the next receipt 61 while transporting the leading end of the next receipt by the distance D to the paper cutter position, and then cutting at the trailing end of the receipt 61 just printed. This eliminates the foregoing blank space as shown in Fig. 7B, and thus eliminates wasted receipt paper.

Printer control for cutting at the trailing end of the current receipt 61 after thus printing the header print data for the next receipt is described next below. Note that the length of the header print data in the paper transportation direction is shorter than the distance D between the printing position and the paper cutter position (referred to below as the head-cutter distance D).

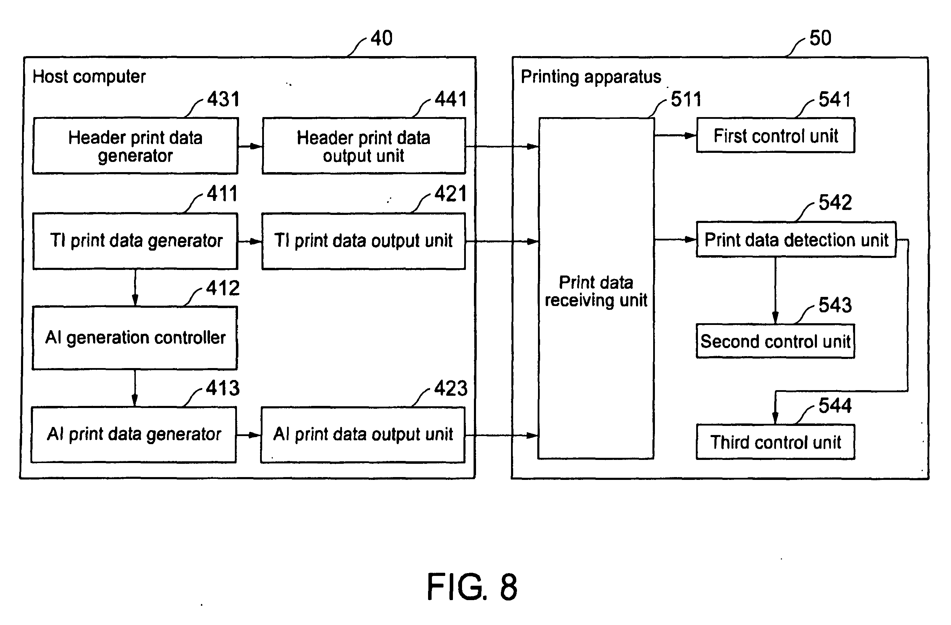

Fig. 8 is a function block diagram describing the control arrangement of the host computer 40 and printing apparatus 50 in this embodiment of the invention. As shown in the figure the host computer 40 has the TI print data generator 411, the TI output unit 421, the AI generation controller 412, the AI print data generator 413, the AI output unit 423, the header print data generator 431, and the header print data output unit 441.

The header print data generator 431 produces the header print data for printing the receipt header. The header print data output unit 441 outputs the resulting header print data to the printing apparatus 50.

If the content of the header print data remains the same on all receipts, that is, if only one type of header print data is used, the header print data generator 431 simply reads and passes the header print data from a storage medium (not shown in the figure) in the host computer 40 to the header print data output unit 441. However, if all or part of the content of the header print data changes according to the time of day, day of the week, or operator setting or the header print data is selected from among a plurality of headers, the header print data generator 431 produces and passes the header print data accordingly to the header print data output unit 441.

The header print data output unit 441 then simply passes the header print data received from the header print data generator 431 directly to the printing apparatus 50 without adding an identifier.

The header print data generator 431 and header print data output unit 441 can be rendered primarily by the POS application 41 a or utility 41 b. In addition, the TI print data generator 411, TI output unit 421, AI generation controller 412, AI print data generator 413, and AI output unit 423 have the same function as in the foregoing first embodiment, and further description thereof is thus omitted here.

The printing apparatus 50 has the print data receiving unit 511, a first control unit 541, a print data detection unit 542, a second control unit 543, and a third control unit 544. The first control unit 541 handles control when the print data receiving unit 511 receives TI print data. The print data detection unit 542 determines the data type when print data is received while execution of the paper cut command is delayed. The second control unit 543 handles control when the print data received by the print data detection unit 542 is identified as header print data. The third control unit 544 handles control when the received print data is identified as AI print data.

The print data receiving unit part of the printing apparatus 50 is rendered primarily by the data receiving unit 100, and the other parts of the printing apparatus 50 are rendered primarily by the control unit 200, as shown in Fig. 3.

When TI print data is received, the first control unit 541 prints the TI print data and saves the paper cut command added to the TI print data (that is, sets the paper cut command flag). There is no limit to how long the paper cut command is saved in this embodiment of the invention.

The print data detection unit 542 determines whether print data received while execution of the paper cut command is delayed is AI print data or header print data based on whether an identifier (for example, the transaction number) is present. The received print data is thus known to be AI print data if the identifier is detected in the print data, and to be header print data if the identifier is not detected.

If the received print data is header print data, the second control unit 543 executes the paper cut command after printing the header print data. If the received print data is AI print data, the third control unit 544 prints the AI print data and continues saving the paper cut command. The paper cut command is thus not executed until the header print data is received, and execution waits until the header print data is received. Hence, while the first embodiment, first causes the paper cut command to be executed and then header print data to be printed, the second embodiment first prints the header print data, thereby moving the trailing end of the preceding receipt from the printing position to the paper cutting position at the same time, and causes the paper cut command to be executed subsequently. In this way the receipt header is printed with none or a little blank space only from the top edge of the receipt.

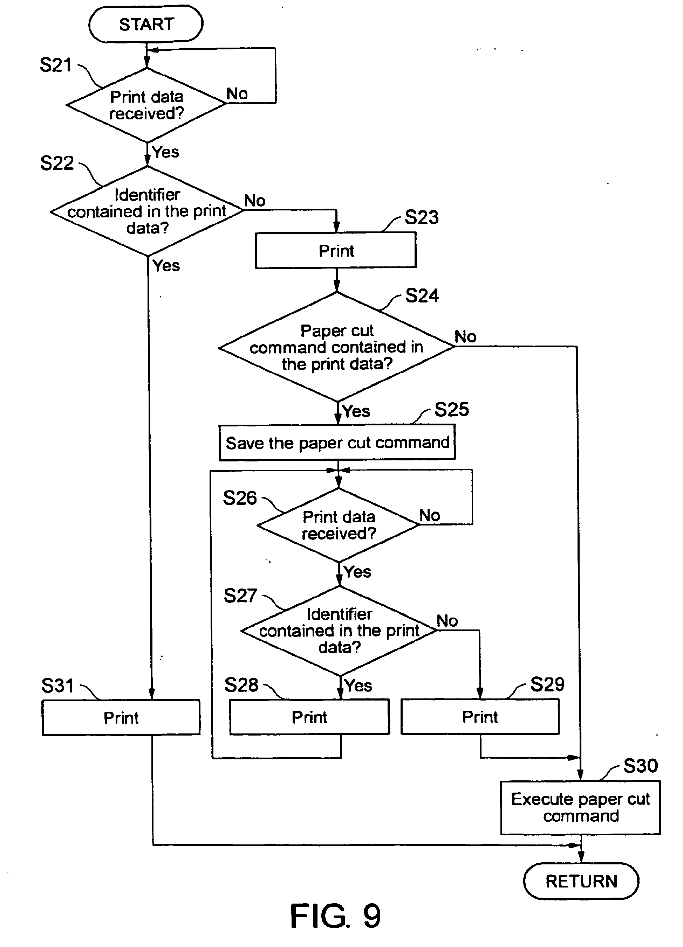

Printing control in a printing apparatus 50 according to this embodiment of the invention is described below with reference to the flow chart in Fig. 9. For brevity, this embodiment of the invention is described below as receiving and printing TI print data, AI print data (such as coupon data), and header print data (such as a top logo), and receiving and printing other types of print data is not addressed.

When the printing apparatus 50 receives print data from the host computer 40 (S21 returns *Yes*), the printing apparatus 50 determines if the identifier (that may be the transaction number as in the first embodiment) is contained in the print data (S22). If the identifier is not contained in the print data (S22 returns *No*), the printing apparatus 50 prints the print data (TI print data or header print data) (S23), and determines whether a paper cut command is appended to the print data (whether the print data is TI print data) (S24).

If a paper cut command is detected (TI print data was received) (S24 returns Yes), the paper cut command flag is set and the paper cut command is thus saved (S25). The printing apparatus 50 then waits to receive the next print data (S26), and determines if the print data contains the identifier (that is, if AI print data was received) when print data is received (S27).

If the identifier is found in the received print data (AI print data was received) (S27 returns *Yes*), the print data is printed (S28) and the printing apparatus 50 waits to receive next print data (S26). The paper cut command flag is thus not cleared (saving the paper cut command is not stopped) when AI print data is received while the paper cut command flag is set.

On the other hand, if the print data received while the paper cut command flag is set does not contain the identifier (that is, header print data was received) (S27 returns *No*), the print data is printed (S29), the paper cut command is executed, and the paper cut command flag is cleared (S30).

Referring to Fig. 6, while the header print data is being printed, the receipt paper is advanced in the transportation direction. When the TI print data, AI print data, and header print data are thus received and printed in this order, the border between the end of the AI print and the start of the header for the next receipt, i.e., the end of the current receipt, moves from the printing position toward the paper cutter position. If the receipt paper is advanced during the printing of the header print data by an length roughly equal to D, the receipt paper is cut between the AI print data and header print data and the header print data is printed for the next receipt 61 (see Fig. 5).

Furthermore, if AI print data is not received, the receipt paper is cut between the TI print data and the header print data, and the header print data is printed for the next receipt 61 (but TI print data for the next receipt 61 is not printed) (see Fig. 7B).

If the received print data does not contain the identifier and the paper cut command is not appended to the print data received when the paper cut command flag is set (that is, header print data was received) (S24 returns *No*), the paper cut command is executed (S30). Receiving only the header print data when the paper cut command flag is thus not set could occur immediately after the printing apparatus 50 is powered on or when only the header print data is printed, for example. When data other than the TI print data, AI print data, and header print data is received, the paper cutting process (S30) is also executed after printing the data not containing an identifier (S23).

If the paper cut command flag is not set and the identifier is contained in the received print data (such as when AI print data is received after the header print data) (S22 returns *Yes*), the print data is simply printed (S31) and the printing apparatus 50 waits to receive the next print data (S21). A receipt 61 on which the TI print data and AI print data are printed contiguously can thus be issued even when the AI print data is sent before the TI print data.

While a paper cut command added to the TI print data is saved, this embodiment of the invention determines whether the received print data is AI print data or header print data based on the presence of an identifier (S27), and the receipt paper is cut after printing the header print data if the received print data is header print data. The receipt 61 can thus be cut at a desirable position (between the AI print data or TI print data and the header print data) while reducing or eliminating receipt paper waste even in a printing apparatus 50 having a head-cutter distance D.

Furthermore, by controlling operation on the printing apparatus side according to the type of print data received, a function for printing header print data, for example, can be added by adding a utility, for example, on the host computer side without modifying the POS application 41 a.

Yet further, when the AI print data is produced based on an analysis of the TI print data, AI print data may or may not be sent to the printing apparatus after TI print data depending upon the content of the transaction information. However, even when the AI print data is not sent (such as when header print data for the next receipt 61 is received while the paper cut command flag is set), the receipt 61 can be cut at a desirable position between the TI print data and header print data.

Multiple units of AI print data can thus be printed because the receipt paper is cut at an appropriate position (that is, between the last AI print data and the following header print data, and not between the TI print data and AI print data or between continuous blocks of AI print data) even when multiple units of AI print data are sent to the printing apparatus 50, such as when AI print data for advertising and for coupons is sent. A wider variety of print data can thus be printed without changing the POS application 41 a.

### THIRD EMBODIMENT

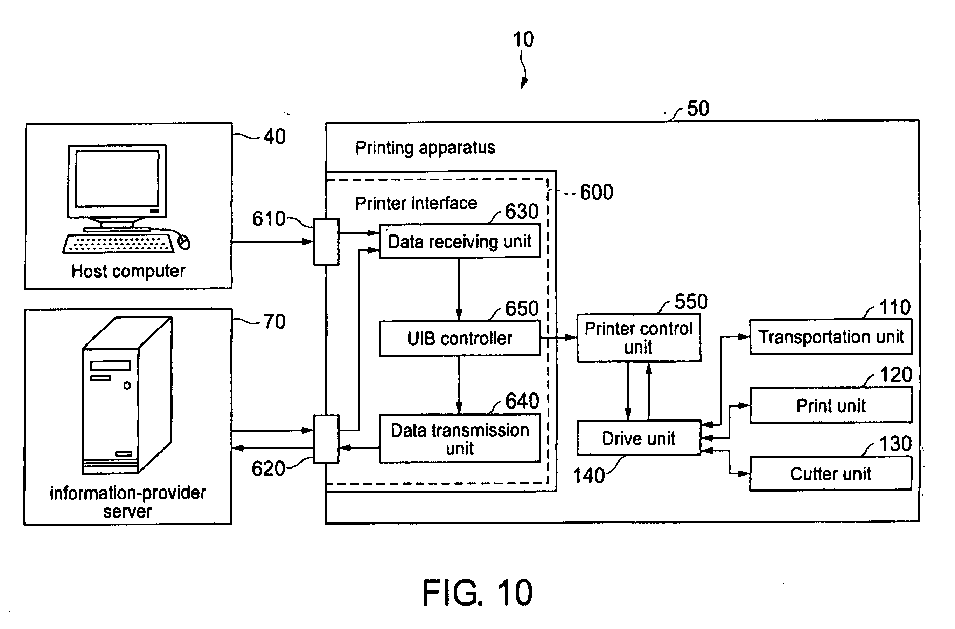

A third embodiment of the present invention is described next with reference to Fig. 10.

The host computer 40 sends TI print data and AI print data to the printing apparatus 50 in the foregoing embodiments. This embodiment of the invention, however, adds an information-provider server 70 for generating and providing this AI print data, and thus differs from the preceding embodiments in that the TI print data is sent from the host computer 40 and the AI print data is sent from the information-provider server 70 to the printing apparatus 50.

In addition, a printer interface 600 (Universal Interface Board: UIB) having two ports 610 and 620 for connecting to the host computer 40 and the information-provider server 70, respectively, is removable installed to the printing apparatus 50, and the printing apparatus 50 thus acquires the print data through this printer interface 600.

For brevity, only the differences between this embodiment and the configuration of the first embodiment (shown in Fig. 1) are described below.

When the host computer 40 sends TI print data to the printing apparatus 50 in a POS system 10 according to this embodiment of the invention, the data receiving unit 630 in the printer interface 600 receives the print data through the first port 610 and passes the data through the UIB controller 650 to the printer control unit 550, and the data transmission unit 640 sends the TI print data through the second port 620 to the information-provider server 70. The TI print data passed to the printer control unit 550 is then printed by the transportation unit 510 and print unit 520 by way of the drive unit 540. The receipt is then cut by the cutter unit 530 at an appropriate time based on the paper cut command added to the TI print data.

The TI print data sent to the information-provider server 70 is interpreted by the information-provider server 70. More specifically, the information-provider server 70 determines based on the acquired TI print data whether to generate AI print data, and then generates or does not generate AI print data accordingly.

When AI print data is generated, the information-provider server 70 also adds an identifier (e.g., the transaction number) before sending the data to the printing apparatus 50 (printer interface 600). The data receiving unit 630 of the printer interface 600 receives the AI print data through the second port 620 and passes the data through the UIB controller 650 to the printer control unit 550 for printing.

Note that the parts of the printing apparatus 50 shown in Fig. 2 are achieved by means of the UIB controller 650 in this embodiment of the invention.

By incorporating an information-provider server 70 as described above, this embodiment of the invention enables adding AI print data with minimal capital investment and without changing an existing host computer 40 (including the POS application 41 a) that does not already have a function for printing such AI print data.

Furthermore, by applying the arrangement of the first embodiment and the second embodiment to the arrangement of this embodiment, print data containing TI print data and AI print data can be efficiently printed even when new functionality is added, and a receipt 61 that is cut at an appropriate position determined by the print data can be issued.

Furthermore, because the printer interface 600 of the printing apparatus 50 determines if the identifier is contained in the received print data and controls the timing at which the paper cut command is executed, new functions can be added to the printing apparatus 50 without modifying the printer firmware.

As described in the first to third embodiments above, printer operation is controlled based on the received print data in a printing apparatus 50 according to the present invention, and new functionality (such as printing print data other than TI print data and AI print data) can be added on the host computer side by adding a utility 41b to the host computer 40. Changing the POS application 41a is therefore not necessary.

Furthermore, because the AI print data is generated as a result of interpreting the TI print data, AI print data is not always sent to the printing apparatus 50 following the TI print data. The receipt 61 can still be cut off at an appropriate position even when no AI print data is sent to the printing apparatus 50, however, because the timing at which the paper cut command is processed is varied according to the presence of an identifier.

The timing for executing the paper cut command is changed according to the presence of an identifier in the foregoing embodiments of the invention, but the timing could alternatively be changed according to the type of identifier. That is, the host computer 40 (or information-provider server 70) could add a different identifier to AI print data and the header print data, and the printing apparatus 50 could read the identifier to determine the type of print data.

The printing apparatus 50 described above typically uses a thermal print head, but the print head could be an inkjet head, wire dot print head, or other type of printing device.

The control arrangement of the host computer 40 and printing apparatus 50 can also be realized as a computer-readable program. This program can be provided stored on a recording medium so that the program can be used on other computers. Examples of such a recording medium include hard disk drives, flash ROM, memory cards (such as Compact Flash (R), Smart media, and memory sticks), Compact Disc (R), magneto-optical disc, DVD media, and floppy disks.

The present invention is not be limited to a POS system 10 as described above, and can be applied to a stand-alone electronic cash register not connected to a POS server 30.

## Claims

1. A printing apparatus for printing a receipt (61) based on print data containing first print data representing transaction information and having a paper cut command appended thereto, and second print data representing additional information to be printed in addition to the first print data and having an identifier added thereto, said printing apparatus comprising:
receiving means (511) adapted to separately receive, one after the other, said first print data and said second print data;
a transportation unit (110) for conveying a printing medium on which the receipt (61) is to be printed;
a printing unit (120) for printing the receipt (61) synchronized to said conveying of the printing medium;
a cutter unit (130) responsive to said paper cut command, for cutting off the printed receipt (61) at its trailing end from said printing medium;
a first control unit (521) responsive to said receiving means (511) receiving the first print data for controlling the transportation unit (110) and the printing unit (120) to print the first print data and to delay execution of the paper cut command;
a detection unit (522) for determining if print data received while execution of the paper cut command is delayed is the second print data based on whether the identifier is detected in the received print data; and
a second control unit (523) responsive to said detection unit (522) determining received print data to be the second print data for controlling the transportation unit (110), the printing unit (120), and the cutter unit (130) to print the second print data and then execute the paper cut command, and to execute the paper cut command before printing the received print data when the received print data is determined to not be second print data.

2. The apparatus of claim 1, further comprising:
a counter (524) for measuring how long execution of the paper cut command is delayed; and
a third control unit (525) for cancelling the delay and executing the paper cut command when the delay time exceeds a specified time.

3. The apparatus of claim 1 or 2 wherein said print data contains said first print data, said second print data, and third print data representing a receipt header, and wherein
said detection unit (542) is adapted to determine if print data received while execution of the paper cut command is delayed is the second print data or the third print data based on whether the identifier is detected; and
said second control unit (543) is responsive to said detection unit (522) determining received print data to be the third print data for controlling the transportation unit (110), printing unit (120), and cutter unit (130) to print the third print data and then execute the paper cut command, and responsive to said detection unit (542) determining the received print data to be the second print data for controlling the transportation unit (110) and the printing unit (120) to print the second print data, and then continuing to delay execution of the paper cut command while waiting to receive the third print data.

4. The apparatus of claim 1, wherein the receiving means (630), said control units (650) and said detection unit are implemented as a printer interface (600) detachably mounted in the printing apparatus.

5. The apparatus of claims 2 and 4, wherein said counter and said third control unit are implemented as part of said printer interface (600).

6. A POS system having a printing apparatus (50) as described in any one of the preceding claims, and a host computer (40) for generating the first and the second print data and sending it to printing apparatus (50), wherein:
the host computer (40) is controlled by a POS application and comprises:
a first print data generator (411) for generating the first print data with the paper cut command added thereto;
a first print data output unit (421) for sending, to the printing apparatus (50), the first print data;
a second print data generation controller (412) for analyzing the first print data and determining based thereon whether to generate second print data;
a second print data generator (413) responsive to the second print data generation controller (412) determining that second print data is to be generated, for generating the second print data with the identifier added thereto; and
a second print data output unit (423) for outputting the second print data to the printing apparatus (50).

7. The POS system of claim 6, wherein the host computer (40) further comprises:
a third print data generator (431) for generating third print data;
a third print data output unit for sending the third print data to the printing apparatus (50).

8. The POS system of claim 6 or 7, wherein the first print data generated by the POS application contains a transaction number that is different in each transaction process; and
the second print data output unit extracts the transaction number from the first print data and adds this transaction number to the second print data as the identifier in such a manner as to uniquely identify the second print data.

9. A method of controlling a printing apparatus (50) as defined in claim 1 or 2, for printing a receipt (61) based on print data containing first print data representing transaction information, and second print data representing additional information to be printed in addition to the first print data and having an identifier added thereto, said method comprising:
a) separately receiving one after the other said first print data with a paper cut command added thereto and said second print data;
b) printing the first print data and delaying execution of the paper cut command when the first print data is received;
c) determining if print data received while execution of the paper cut command is delayed is second print data based on whether the identifier is detected in the received print data;
d) printing the second print data and then executing the paper cut command when the received print data is determined to be second print data in step c); and
e) executing the paper cut command before printing the received print data when the received print data is determined to not be second print data in step c).

10. The method of claim 9 for controlling a printing apparatus (50) as defined in claim 3 or 4 for printing a receipt (61) based on print data containing said first print, said second print data, and header print data, and printing header print data for the next receipt (61) before cutting off the printed receipt (61) at its trailing end, wherein:
step a) comprises separately receiving one after the other said first print data with the paper cut command added thereto, said second print data, and said third print data;
step c) comprises determining if print data received while execution of the paper cut command is delayed is the header print data or the second print data based on whether the identifier is detected in the received print data; and
steps e) and d) are replaced by
e') printing the second print data when the received print data is determined to be second print data in step c) and then continuing to delay execution of the paper cut command while waiting to receive the third print data; and
d') printing the header print data when the received print data is determined to be header print data, in step c) and then executing the paper cut command.

11. A medium readable by a machine, the medium carrying a program of instructions executable by the machine to perform the method according to claim 9 or 10.

## Patentansprüche

1. Druckvorrichtung zum Drucken einer Quittung (61) auf der Basis von Druckdaten, die Transaktionsinformation repräsentierende erste Druckdaten, an die ein Papierschneidebefehl angefügt ist, sowie zusätzliche Information repräsentierende zweite Druckdaten, die zusätzlich zu den ersten Druckdaten zu drucken sind und ein dazu hinzugefügtes Identifizierungszeichen haben, enthalten, wobei die Druckvorrichtung aufweist:
ein Empfangsmittel (511), das so eingerichtet ist, dass es getrennt und nacheinander die ersten und die zweiten Druckdaten empfängt;
eine Transporteinheit (110) für den Transport eines Druckmediums, auf das die Quittung (61) zu drucken ist;
eine Druckeinheit (120) zum Drucken der Quittung (61) synchron mit dem Transport des Druckmediums;
eine Schneideeinheit (130), die auf den Papierschneidebefehl anspricht, um die gedruckte Quittung (61) an ihrem hinteren Rand vom Druckmedium abzuschneiden;
eine erste Steuereinheit (521), die auf das Empfangsmittel (511), das die ersten Druckdaten empfängt, anspricht, um die Transporteinheit (110) und die Druckeinheit (120) zum Drucken der ersten Druckdaten zu steuern und die Ausführung des Papierschneidebefehls zu verzögern;
eine Detektoreinheit (522) zum Bestimmen, ob es sich bei während der Verzögerung der Ausführung des Papierschneidebefehls empfangenen Druckdaten um die zweiten Druckdaten handelt, und zwar abhängig davon, ob das Identifizierungszeichen in den empfangenen Druckdaten erkannt wird; und
eine zweite Steuereinheit (523), die darauf anspricht, dass die Detektoreinheit (522) bestimmt, dass empfangene Druckdaten die zweiten Druckdaten sind, um die Transporteinheit (110), die Druckeinheit (120) und die Schneideeinheit (130) zum Drucken der zweiten Druckdaten und dann zum Ausführen des Papierschneidebefehls zu steuern, und den Papierschneidebefehl vor dem Drucken der empfangenen Druckdaten auszuführen, wenn bestimmt wird, dass es sich bei den empfangenen Druckdaten nicht um die zweiten Druckdaten handelt.

2. Vorrichtung nach Anspruch 1, ferner aufweisend:
einen Zähler (524) zum Messen, wie lang die Ausführung des Papierschneidebefehls verzögert wird; und
eine dritte Steuereinheit (525) zum Aufheben der Verzögerung und zur Ausführung des Papierschneidebefehls, wenn die Verzögerungszeit eine vorgegebene Zeit überschreitet.

3. Vorrichtung nach Anspruch 1 oder 2, bei der die Druckdaten die ersten Druckdaten, die zweiten Druckdaten und dritte Druckdaten, die einen Quittungsvorspann repräsentieren, enthalten und bei der
die Detektoreinheit (542) so ausgeführt ist, dass sie bestimmt, ob es sich bei während der Verzögerung der Ausführung des Papierschneidebefehls empfangenen Druckdaten um die zweiten oder die dritten Druckdaten handelt, und zwar abhängig davon, ob das Identifizierungszeichen erkannt wird; und
die zweite Steuereinheit (523) darauf anspricht, dass die Detektoreinheit (522) bestimmt, dass empfangene Druckdaten die dritten Druckdaten sind, um die Transporteinheit (110), die Druckeinheit (120) und die Schneideeinheit (130) zum Drucken der dritten Druckdaten und dann zum Ausführen des Papierschneidebefehls zu steuern, und darauf anspricht, dass die Detektoreinheit (542) bestimmt, dass die empfangenen Druckdaten die zweiten Druckdaten sind, um die Transporteinheit (110) und die Druckeinheit (120) zum Drucken der zweiten Druckdaten zu steuern, und dann mit der Verzögerung der Ausführung Papierschneidebefehls fortzufahren, während sie auf den Empfang der dritten Druckdaten wartet.

4. Vorrichtung nach Anspruch 1, bei der das Empfangsmittel (630), die Steuereinheiten (650) und die Detektoreinheit als eine Druckerschnittstelle (600) implementiert sind, die abnehmbar in der Druckvorrichtung montiert ist.

5. Vorrichtung nach den Ansprüchen 2 und 4, bei der der Zähler und die dritte Steuereinheit als Teil der Druckerschnittstelle (600) implementiert sind.

6. Kassensystem mit einer Druckvorrichtung (50), wie sie in einem der vorhergehenden Ansprüche beschrieben ist, und einem Host-Computer (40) zum Erzeugen der ersten und der zweiten Druckdaten und zum Senden derselben an die Druckvorrichtung (50), bei der:
der Host-Computer (40) von einem Kassenanwendungsprogramm gesteuert ist und aufweist:
einen ersten Druckdatengenerator (411) zum Erzeugen der ersten Druckdaten mit dem daran angefügten Papierschneidebefehl;
eine erste Druckdatenausgabeeinheit (421) zum Senden der ersten Druckdaten an die Druckvorrichtung (50);
eine Steuerung (412) für die Erzeugung der zweiten Druckdaten zum Analysieren der ersten Druckdaten und darauf basierend zur Bestimmung, ob zweite Druckdaten zu erzeugen sind;
einen zweiten Druckdatengenerator (413), der darauf anspricht, dass die Steuerung (412) für die Erzeugung der zweiten Druckdaten bestimmt, dass zweite Druckdaten zu erzeugen sind, um die zweiten Druckdaten mit dem dazu hinzugefügten Identifizierungszeichen zu erzeugen; und
eine zweite Druckdatenausgabeeinheit (423) zum Ausgeben der zweiten Druckdaten an die Druckvorrichtung (50).

7. Kassensystem nach 6, bei dem der Host-Computer (40) ferner aufweist:
einen dritten Druckdatengenerator (431) zum Erzeugen dritter Druckdaten; und
eine dritte Druckdatenausgabeeinheit zum Senden der dritten Druckdaten an die Druckvorrichtung (50).

8. Kassensystem nach Anspruch 6 oder 7, bei dem die ersten von dem Kassenanwendungsprogramm erzeugten Druckdaten eine Transaktionsnummer enthalten, die in jedem Transaktionsprozess verschieden ist; und
die zweite Druckdatenausgabeeinheit die Transaktionsnummer aus den ersten Druckdaten extrahiert und diese Transaktionsnummer zu den zweiten Druckdaten als das Identifizierungszeichen auf eine solche Weise hinzufügt, dass die zweiten Druckdaten eindeutig **gekennzeichnet** sind.

9. Verfahren zum Steuern einer Druckvorrichtung (50) nach Anspruch 1 oder 2 zum Drucken einer Quittung (61) auf der Basis von Druckdaten, die Transaktionsinformation repräsentierende erste Druckdaten und zusätzliche Information repräsentierende zweite Druckdaten, die zusätzlich zu den ersten Druckdaten zu drucken sind und ein dazu hinzugefügtes Identifizierungszeichen haben, enthalten, wobei das Verfahren aufweist:
a) getrenntes und aufeinander folgendes Empfangen der ersten Druckdaten mit einem dazu hinzugefügten Papierschneidebefehl und der zweiten Druckdaten;
b) Drucken der ersten Druckdaten und Verzögern der Ausführung des Papierschneidebefehls, wenn die ersten Druckdaten empfangen werden;
c) Bestimmen, ob es sich bei während der Verzögerung der Ausführung des Papierschneidebefehls empfangenen Druckdaten um die zweiten Druckdaten handelt, und zwar abhängig davon, ob das Identifizierungszeichen in den empfangenen Druckdaten erkannt wird;
d) Drucken der zweiten Druckdaten und dann Ausführen des Papierschneidebefehls, wenn in Schritt c) bestimmt wird, dass es sich bei den empfangenen Druckdaten um die zweiten Druckdaten handelt; und
e) Ausführen des Papierschneidebefehls vor dem Drucken der empfangenen Druckdaten, wenn in Schritt c) bestimmt wird, dass es sich bei den empfangenen Druckdaten nicht um die zweiten Druckdaten handelt.

10. Verfahren nach Anspruch 9 zum Steuern einer Druckvorrichtung (50) nach Anspruch 3 oder 4 zum Drucken einer Quittung (61) auf der Basis von Druckdaten, die die ersten und die zweiten Druckdaten sowie Druckdaten für einen Vorspann enthalten, und zum Drucken von Vorspann-Druckdaten für die nächste Quittung (61) vor dem Abschneiden der gedruckten Quittung (61) an ihrem hinteren Ende, bei dem:
Schritt a) das getrennte aufeinander folgende Empfangen der ersten Druckdaten mit dem daran angefügten Papierschneidebefehl, der zweiten und der dritten Druckdaten aufweist;
Schritt c) das Bestimmen aufweist, ob es sich bei während der Verzögerung der Ausführung des Papierschneidebefehls empfangenen Druckdaten um die Vorspann-Druckdaten oder die zweiten Druckdaten handelt, und zwar abhängig davon, ob das Identifizierungszeichen in den empfangenen Druckdaten erkannt wird; und
Schritte e) und d) ersetzt werden durch
e') Drucken der zweiten Druckdaten, wenn in Schritt c) bestimmt wird, dass die empfangenen Druckdaten die zweiten Druckdaten sind, und dann Fortfahren mit dem Verzögern der Ausführung des Papierschneidebefehls, während der Empfang der dritten Druckdaten abgewartet wird; und
d') Drucken der Vorspann-Druckdaten, wenn in Schritt c) bestimmt wird, dass die empfangenen Druckdaten die Vorspann-Druckdaten sind, und dann Ausführen des Papierschneidebefehls.

11. Maschinenlesbares Medium, wobei das Medium ein Programm mit Befehlen trägt, die von der Maschine ausführbar sind, um das Verfahren nach Anspruch 9 oder 10 auszuführen.

## Revendications

1. Dispositif d'impression pour imprimer un reçu (61 ) sur la base de données d'impression contenant des premières données d'impression représentant une information de transaction et ayant un ordre de coupe du papier qui en dépend, et de deuxièmes données d'impression représentant une information supplémentaire à imprimer en plus des premières données d'impression et ayant un identificateur qui y est ajouté, le dispositif d'impression comprenant :
des moyens (511) de réception conçus pour recevoir séparément les unes après les autres les premières données d'impression et les deuxièmes données d'impression ;
une unité (110) de transport pour convoyer un support d'impression sur lequel le reçu (61) doit être imprimé ;
une unité (120) d'impression pour imprimer le reçu ( 61) d'une manière synchronisée avec le convoyage du support d'impression ;
une unité (130) à couteau, sensible à l'ordre de coupe du papier, pour séparer par coupe le reçu (61) imprimé sur son bord arrière du support d'impression ;
une première unité (521) de commande sensible aux moyens (511) de réception recevant des premières données d'impression pour commander l'unité (110) de transport et l'unité (120) d'impression afin d'imprimer les premières données d'impression et de retarder l'exécution de l'ordre de coupe du papier ;
une unité (522) de détection pour déterminer si les données d'impression reçues alors que l'exécution de l'ordre de coupe du papier est retardée sont les deuxièmes données d'impression sur la base du point de savoir si l'identificateur est détecté dans les données d'impression reçues ; et
une deuxième unité (523) de commande, sensible à l'unité (522) de détection, déterminant que les données reçues sont les deuxièmes données d'impression pour commander l'unité (110) de transport, l'unité (120) d'impression et l'unité (130) à couteau pour imprimer les deuxièmes données d'impression, puis exécuter l'ordre de coupe du papier, et pour exécuter l'ordre de coupe du papier avant l'impression des données d'impression reçues lorsqu'il est déterminé que les données d'impression reçues ne sont pas des deuxièmes données d'impression.

2. Dispositif suivant la revendication 1, comprenant, en outre :
un compteur (524) pour mesurer de combien l'exécution de l'ordre de coupe du papier est retardée ; et
une troisième unité (525) de commande pour annuler le retard et exécuter l'ordre de coupe du papier lorsque le retard dépasse un retard spécifié.

3. Dispositif suivant la revendication 1 ou 2, dans lequel les données d'impression contiennent les premières données d'impression, les deuxièmes données d'impression et des troisièmes données d'impression représentant une en-tête de reçu et dans lequel
l'unité (542) de détection est conçue pour déterminer si des données d'impression reçues, alors que l'exécution de l'ordre de coupe du papier est retardée, sont les deuxièmes données d'impression ou les troisièmes données d'impression sur la base du point de savoir si l'identificateur est détecté ; et
la deuxième unité (543) de commande est sensible à l'unité (522) de détection déterminant que les données d'impression reçues sont les troisièmes données d'impression pour commander l'unité (110) de transport, l'unité (120) d'impression et l'unité (130) à couteau pour imprimer les troisièmes données d'impression, puis exécuter l'ordre de coupe du papier et sensible à l'unité (542) d'impression déterminant que les données d'impression reçues sont les deuxièmes données d'impression pour commander l'unité (110) de transport et l'unité (120) d'impression pour imprimer les deuxièmes données d'impression, puis continuer à retarder l'exécution de l'ordre de coupe du papier en attendant de recevoir les troisièmes données d'impression.

4. Dispositif suivant la revendication 1, dans lequel les moyens (630) de réception, les unités (650) de commande et l'unité de détection sont mis en oeuvre sous la forme d'une interface (600) d'imprimeuse montée de manière amovible dans le dispositif d'impression.

5. Dispositif suivant les revendications 2 et 4, dans lequel le compteur et la troisième unité de commande sont mis en oeuvre en tant que partie de l'interface (600) d'imprimeuse.

6. Système POS ayant un dispositif (50) d'impression tel que décrit dans l'une quelconque des revendications précédentes, et un ordinateur (40) hôte pour produire les premières et deuxièmes données d'impression et les envoyer au dispositif (50) d'impression, dans lequel :
l'ordinateur (40) hôte est commandé par une application POS et comprend :
un premier producteur (411) de données d'impression pour produire les premières données d'impression ayant l'ordre de coupe du papier qui y est ajouté ;
une première unité (421) de sortie de données d'impression pour envoyer au dispositif (50) d'impression les premières données d'impression ;
un deuxième dispositif (412) de commande de production de données d'impression pour analyser les premières données d'impression et déterminer sur cette base s'il faut produire des deuxièmes données d'impression;
un deuxième producteur (413) de données d'impression sensible au deuxième dispositif (412) de commande de production de données d'impression déterminant s'il faut produire des deuxièmes données d'impression pour produire les deuxièmes données d'impression ayant l'identificateur qui y est ajouté ; et
une deuxième unité (423) de sortie de données d'impression pour sortir les deuxièmes données d'impression et les envoyer au dispositif (50) d'impression.

7. Système POS suivant la revendication 6, dans lequel l'ordinateur (40) hôte comprend, en outre :
un troisième producteur (431) de données d'impression pour produire des troisièmes données d'impression ;
une troisième unité de sortie de données d'impression pour envoyer les troisièmes données d'impression au dispositif (50) d'impression.

8. Système POS suivant la revendication 6 ou 7, dans lequel les premières données d'impression produites par l'application POS contiennent un nombre de transactions qui est différent dans chaque opération de transaction ; et
la deuxième unité de sortie de données d'impression extrait le nombre de transactions des premières données d'impression et ajoute ce nombre de transactions aux deuxièmes données d'impression comme identificateur de façon à identifier de façon unique les deuxièmes données d'impression.

9. Procédé de commande d'un dispositif (50) d'impression tel que défini à la revendication 1 ou 2, pour imprimer un reçu (61) sur la base de données d'impression contenant des premières données d'impression représentant les informations de transaction et de deuxièmes données d'impression représentant une information supplémentaire à imprimer en plus des premières données d'impression et ayant un identificateur qui y est ajouté, procédé dans lequel :
a) on reçoit séparément les unes après les autres les premières données d'impression avec un ordre de coupe du papier qui y est ajouté et les deuxièmes données d'impression
b) on imprime les premières données d'impression et on retarde l'exécution de l'ordre de coupe du papier lorsque les premières données d'impression sont reçues ;
c) on détermine si des données d'impression reçues, alors que l'ordre d'exécution de l'ordre de coupe du papier est retardé, sont les deuxièmes données d'impression sur la base du point de savoir si l'identificateur est détecté dans les deuxièmes données d'impression reçues ;
d) on imprime les deuxièmes données d'impression puis on exécute l'ordre de coupe du papier lorsqu'il est déterminé que les données d'impression reçues sont les deuxièmes données d'impression au stade c) ; et
e) on exécute l'ordre de coupe du papier avant l'impression des données d'impression reçues lorsqu'il est déterminé que les données d'impression reçues ne sont pas les deuxièmes données d'impression au stade c).

10. Procédé suivant la revendication 9 de commande d'un dispositif (50) d'impression tel que défini à la revendication 3 ou 4 pour imprimer un reçu (61) sur la base de données d'impression contenant les premières données d'impression, les deuxièmes données d'impression et des données d'impression d'en-tête et pour imprimer des données d'impression d'en-tête pour le reçu (61) suivant avant de séparer le reçu (61) imprimé par découpe à son extrémité arrière, dans lequel :
le stade a) comprend la réception séparément, les unes après les autres, des premières données d'impression ayant l'ordre de coupe du papier qui y est ajouté, des deuxièmes données d'impression et des troisièmes données d'impression ;
le stade c) comprend la détermination du point de savoir si des données d'impression reçues, alors que l'exécution de l'ordre de coupe du papier est retardée, sont les données d'impression, d'en-tête ou les deuxièmes données d'impression sur la base du point de savoir si l'identificateur est détecté dans les données d'impression reçues ; et
les stades e) et d) sont remplacés par
e') on imprime les deuxièmes données d'impression lorsqu'il est déterminé que les données d'impression reçues sont les deuxièmes données d'impression au stade c), puis on continue à retarder l'exécution de l'ordre de coupe du papier en attendant de recevoir les troisièmes données d'impression ; et
d') on imprime les données d'impression d'en-tête lorsqu'il est déterminé que les données d'impression reçues sont des données d'impression d' en-tête au stade c), puis on exécute l'ordre de coupe du papier.

11. Support pouvant être lu par une machine, le support portant un programme d'instructions pouvant être exécutées par la machine pour effectuer le procédé suivant la revendication 9 ou 10.
